# EUROPÄISCHE PATENTSCHRIFT

(11) **EP 1 744 937 B1**
(45) Veröffentlichungstag und Bekanntmachung des Hinweises auf die Patenterteilung: **14.09.2016**
(21) Anmeldenummer: 05743145.4
(22) Anmeldetag: 26.04.2005
(51) Int. Cl.: B60R 21/00, B60R 21/207

(54) **SITZ MIT EINER THORAX-AIRBAGEINRICHTUNG SOWIE THORAX-AIRBAG-AUSLÖSEVERFAHREN**
SEAT PROVIDED WITH THORAX AIR BAG DEVICE AND METHOD FOR ACTIVATING SAID THORAX AIRBAG
SIEGE AVEC DISPOSITIF SAC GONFLABLE THORAX, ET PROCEDE DE DECLENCHEMENT DU SAC GONFLABLE THORAX

(30) Priorität: 26.04.2004 DE 202004006562 U
(43) Veröffentlichungstag der Anmeldung: 24.01.2007
(73) Patentinhaber: Inova GmbH Technische Entwicklungen, 65428 Rüsselsheim (DE)
(72) Erfinder: MÜLLER, Olaf, 65428 Rüsselsheim (DE)
(74) Vertreter: Reichert & Lindner Partnerschaft Patentanwälte
(86) Internationale Anmeldenummer: PCT/DE2005/000765
(87) Internationale Veröffentlichungsnummer: WO 2005/102789

(56) Entgegenhaltungen:
- EP-A- 0 782 944
- DE-A1- 19 860 840
- US-A- 5 762 363
- US-A- 5 927 749
- US-A- 6 045 151
- US-B1- 6 439 597
- PATENT ABSTRACTS OF JAPAN Bd. 1999, Nr. 02, 26. Februar 1999 (1999-02-26) -& JP 10 310017 A (TACHI S CO LTD), 24. November 1998 (1998-11-24)
- PATENT ABSTRACTS OF JAPAN Bd. 1997, Nr. 07, 31. Juli 1997 (1997-07-31) -& JP 09 071205 A (TAKASHIMAYA NIPPATSU KOGYO KK), 18. März 1997 (1997-03-18)
- PATENT ABSTRACTS OF JAPAN Bd. 1999, Nr. 02, 26. Februar 1999 (1999-02-26) -& JP 10 310018 A (T S TEC KK), 24. November 1998 (1998-11-24)

## Beschreibung

Die Erfindung betrifft Sitze mit Thorax-Airbageinrichtungen sowie Auslöseverfahren für Sitze mit Thorax-Airbags. Insbesondere betrifft die vorliegende Erfindung die Unterbringung eines Thorax-Airbags in einer Sitzlehne sowie die Öffnungsfunktion der Sitzlehne zum Austritt des Thorax-Airbags.

### Stand der Technik

Die meisten Thorax-Airbags oder kurz "Thoraxbags" werden entsprechend in der Praxis bekannt gewordenen Beispielen in einer Sitzlehne untergebracht. Man unterscheidet hier mehrere Arten:

Opel, Citroen u.a. positionieren das Airbagmodul in einem sichtbaren Kasten, dessen Deckel sich beim Crash öffnet. Das sieht billig aus und der Kasten ist schwer und aufwendig.

Andere, vor allem Premiumhersteller, installieren einen "unsichtbaren" Airbag unter dem Bezugsstoff. Da die Bezugsstoffe mit ihren unterschiedlichen Elastizitäten dem Entfalten unterschiedliche Widerstände entgegensetzen und damit die Zeit für die Entfaltung verzögern, treffen die Hersteller unterschiedliche Maßnahmen. VW z.B. verwendet nur dehnungsarme Stoffe. Ford näht zur Bezugsaufreißnaht eine Gewebemanschette mit hartem Material im Aufplatzbereich bei. Renault hat eine geteilte Seitenwange mit eingesetztem Rahmen, durch die der Bag durchschlüpft.

Der Erfinder selbst hat bereits das Problem der dehnungsweichen Stoffe mit der "Laufmaschentechnik" gelöst, was in dem bereits erteilten US-Patent Nr. 6,299,197 und der parallelen offengelegten deutschen Patentanmeldung Nr. 198 60 840.3 offenbart ist.

Das Dokument US 5 927 749 A zeigt einen Sitz nach dem Oberbegriff des Anspruchs 1.

Die vorliegende Erfindung hat und erreicht das Ziel einer weiteren Verbesserung der vorstehenden Technik.

Die vorliegende Erfindung reißt ebenfalls eine Laufmasche in den Bezug. Mit dieser "Laufmasche" startet die Öffnung des Bezuges bei der Airbagentfaltung. Bei der vorliegenden Erfindung wird die Laufmasche nicht durch Fäden, sondern durch ein beigenähtes, besser zu handhabendes Band erzeugt. Dieses Band wird nicht, wie entsprechend Ausführungsbeispielen der o.g. früheren Anmeldungen des Erfinders, im Modulgehäuseboden eines Airbagmoduls befestigt und durch den Gehäusedeckel umgelenkt, sondern ein Umlenkhebel lenkt das Band um. Gleichzeitig ist der Airbag zwischen diesem Umlenkhebel und dem Laufmaschenband "eingepackt".

Damit wird insbesondere der Vorteil erreicht, dass bei einem solchen Thorax-Airbag auf ein Gehäuse verzichtet werden kann.

Nachfolgend sind vorzugsweise Ausgestaltungen aufgelistet:

Sitz mit einer Thorax-Airbageinrichtung wobei das Laufmaschenreißband mittels unverlierbarer Schraube oder einem Niet mitsamt einem Modul als Garantie zur sicheren Montage, vorzugsweise als Teil einer Zertifizierung, verschraubt ist.

Sitz mit einer Thorax-Airbageinrichtung nach einem der vorhergehenden Punkte, wobei Umlenkbügel, Befestigungsblech und Befestigungsbügel für einen Generator eine Trägereinheit bzw. ein Gerippe für das ganze Modul bilden und als Auflage für den Airbag dienen.

Sitz mit einer Thorax-Airbageinrichtung nach einem der vorhergehenden Punkte, wobei eine Abgleitfolie zum Umlenkbügel hinzugefügt ist, um den Airbag besser zu leiten und um einen Schaumausbruch zu verhindern.

Sitz mit einer Thorax-Airbageinrichtung nach einem der vorhergehenden Punkte, wobei eine Abdeckung der unegalen Oberfläche mit Schaumlappen als Teil des Sitzschaums mit Filmscharnier angelenkt und derart ausgeführt ist, dass Raum für das Laufmaschenreißband verbleibt.

Sitz mit einer Thorax-Airbageinrichtung nach einem der vorhergehenden Punkte, wobei ein dünnes, aufgeklebtes Papier vorgesehen ist, das die Airbagfalten für die Montage in Position hält.

Sitz mit einer Thorax-Airbageinrichtung nach einem der vorhergehenden Punkte, wobei das Laufmaschenreißbandes zur Reißnaht beigenäht ist.

Sitz mit einer Thorax-Airbageinrichtung nach einem der vorhergehenden Punkte, wobei das Laufmaschenreißband aus der Reißnaht als sichtbares Airbaglabel austritt.

Sitz mit einer Thorax-Airbageinrichtung, nach einem der vorhergehenden Punkte, wobei eine fühlbare Erhebung am Laufmaschenreißband an der Stelle des Durchlaufs durch den Unlenkbügel angebracht ist.

Sitz mit einer Thorax-Airbageinrichtung nach dem Vorhergehenden Abschnitt, wobei ein paralleles Umlenkbügelgleitstück und die fühlbare Erhebung, beispielsweise ein Niet, eine korrekte Montage beweisen und insbesondereeine Zertifizierung begründen.

Sitz mit einer Thorax-Airbageinrichtung nach einem der vorhergehenden Punkte, wobei der Airbag derart mit einer abgenähten/geklebten Mittelzone versehen ist, dass diese zur Erzeugung einer frühzeitigen Laufmasche zuerst Druck auf das Laufmaschenreißband gibt.

12. Sitz mit einer Thorax-Airbageinrichtung, nach einem der vorhergehenden Punkte, wobei ein zwischen Umlenkbügel und Laufmaschenreißband eingebauter zusätzlicher Hilfsbag vorgesehen ist, der mit kleinerem Volumen und höherem Druck (festeres Textil) die Reißnaht schneller öffnet und durch gezielte Schwächung seiner eigenen Reißnähte das Gas vorbestimmt verteilt.

Bevorzugte und/oder vorteilhafte Ausgestaltungen der Erfindung ergeben sich aus den Ansprüchen.

Die Erfindung wird anhand von Ausführungsbeispielen nachfolgend unter Bezugnahme auf die Zeichnungen lediglich exemplarisch näher erläutert, in denen
- Fig. 1: ein erstes Ausführungsbeispiel einer Thorax-Airbageinrichtung in einer schematischen Draufsicht zeigt,
- Fig. 2: das erste Ausführungsbeispiel einer Thorax-Airbageinrichtung aus der Fig. 1 in einer schematischen Schnittansicht zeigt,
- Fig. 3: ein Detail des ersten Ausführungsbeispiels einer Thorax-Airbageinrichtung aus der Fig. 1 in einer schematischen Draufsicht zeigt,
- Fig. 4: ein erstes Ausführungsbeispiel eines Sitzes mit einer Thorax-Airbageimichtung in einer schematischen Draufsicht teilweise geöffnet zeigt,
- Fig. 5: ein Detail des ersten Ausführungsbeispiels eines Sitzes mit einer Thorax-Airbageinrichtung aus der Fig. 4 in einer schematischen Draufsicht teilweise geöffnet zeigt,
- Fig. 6: das erste Ausführungsbeispiel des ersten Ausführungsbeispiels eines Sitzes mit einer Thorax-Airbageinrichtung aus der Fig. 4 in einer schematischen Schnittansicht gemäß der Blickrichtung "A" in der Fig. 5 zeigt,
- Fig. 7: das erste Ausführungsbeispiel des ersten Ausführungsbeispiels eines Sitzes mit einer Thorax-Airbageinrichtung aus der Fig. 4 in einer schematischen Schnittansicht gemäß dem Mitten-Schnitt "B" in der Fig. 5 zeigt,
- Fig. 8: ein Detail einer Alternative der Vernähung des Laufmaschenreißbandes im Sitzbezug eines Sitzes mit einer Thorax-Airbageinrichtung in einer schematischen Schnittansicht zeigt,
- Fig. 9: ein Detail einer weiteren Alternative der Vernähung des Laufmaschenreißbandes im Sitzbezug eines Sitzes mit einer Thorax-Airbageinrichtung mit sichtbarem "Airbaglabel" in einer schematischen Schnittansicht zeigt,
- Fig. 10: ein Detail eines zweiten Ausführungsbeispiels eines Sitzes mit einer ThoraxAirbageinrichtung in einer schematischen Schnittansicht zeigt,
- Fig. 11: ein erstes Ausführungsbeispiel eines Auslöseverfahrens für einen Thorax-Airbag in einem Sitz in einer schematischen Schnittansicht verdeutlicht zeigt,
- Fig. 12: das erste Ausführungsbeispiel eines Auslöseverfahrens für einen Thorax-Airbag in einem Sitz aus der Fig. 11 in einer schematischen Schnittansicht verdeutlicht zeigt, und zwar zu einem gegenüber der Fig. 11 späteren Zeitpunkt im Verlauf des Auslösens des Thorax-Airbags,
- Fig. 13: ein Detail des ersten Ausführungsbeispiels eines Auslöseveifahrens für einen Thorax-Airbag in einem Sitz aus den Fig. 11 und 12 in einer schematischen Schnittansicht verdeutlicht zeigt,
- Fig. 14: ein weiteres Detail des ersten Ausführungsbeispiels eines Auslöseverfahrens für einen Thorax-Airbag in einem Sitz aus den Fig. 11 und 12 in einer schematischen Schnittansicht verdeutlicht zeigt,
- Fig. 15: ein Detail eines zweiten Ausführungsbeispiels einer Thorax-Airbageinrichtung in einer schematischen Schnittansicht zeigt,
- Fig. 16: ein Detail eines dritten Ausführungsbeispiels einer Thorax-Airbageinrichtung in einer schematischen Schnittansicht zeigt, und
- Fig. 17 - 24: alternative Ausführungsbeispiele in schematischen Ansichten.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

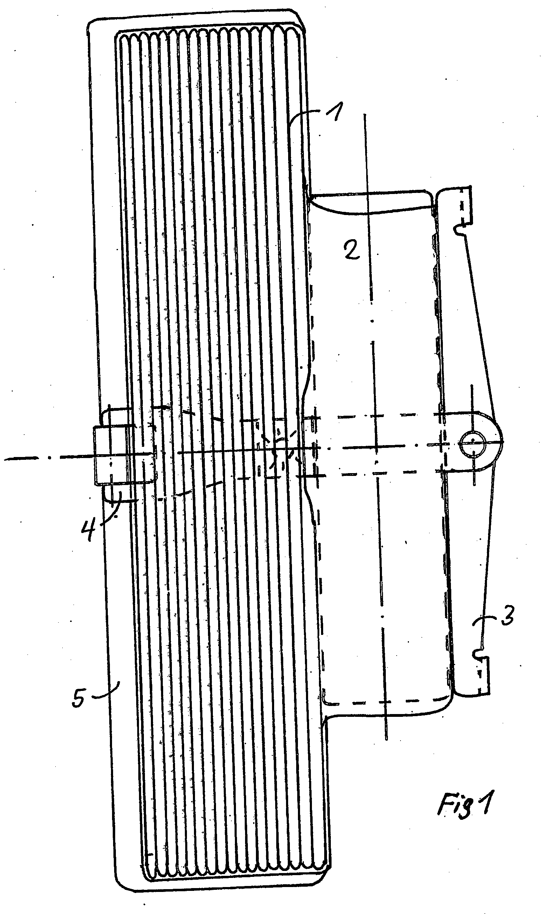

Die Fig. 1 zeigt ein Modul einer Airbageinrichtung mit einem Airbag 1 in der Draufsicht. An einem Generator 2 der Airbageinrichtung ist, wie es technisch üblich ist, ein Befestigungsblech 3 und im rechten Winkel hierzu ein Umlenkbügel 4 befestigt. Letzteres ist eine besonders bevorzugte Ausgestaltung der Erfindung.

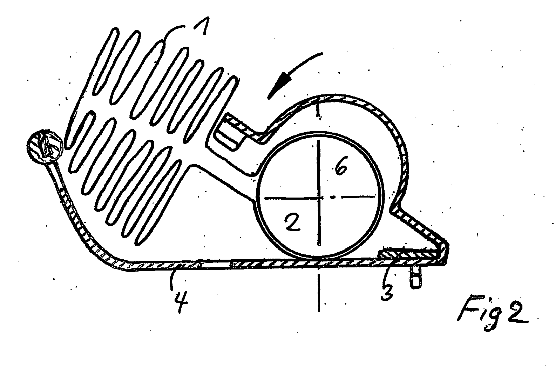

Ein gefalteter Airbag 1 ist z.B. um den Generator 2 bzw. ein Rohr 5, in dem dann der Generator steckt, herumgefaltet, wie in der Fig. 2 gezeigt ist. Der Umlenkbügel 4 ist, wie gezeigt, rechtwinklig am Generator 2 bzw. dessen Rohr 6 befestigt und klemmt dabei den Airbag 1 ein.

Um bei der Airbagentfaltung ein Abreißen von Polsterschaum 7 eines Sitzes (in den Fig. 1 und 2 nicht gezeigt) möglichst zuverlässig zu vermeiden, wird der Umlenkbügel 4 alternativ "verbreitert" durch eine Gleitfolie 5, über die der Airbag 1 aus seiner Mulde 8 nach außen gleitet.

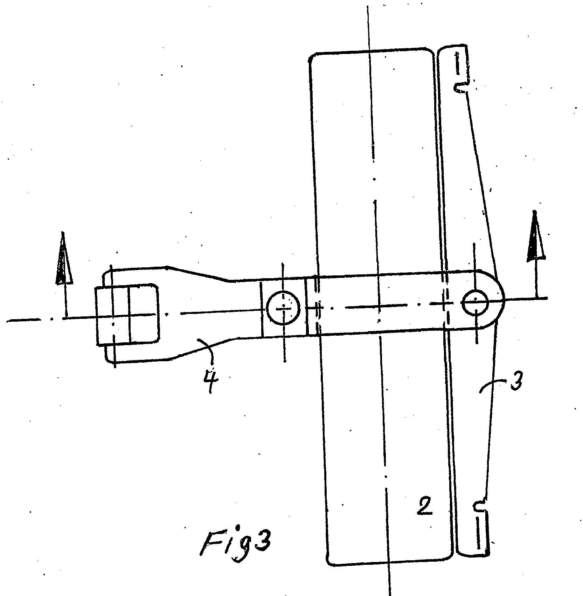

Die Fig. 3 zeigt den Unterzusammenbau von Generator 2, Befestigungsblech 3 und Umlenkbügel 4.

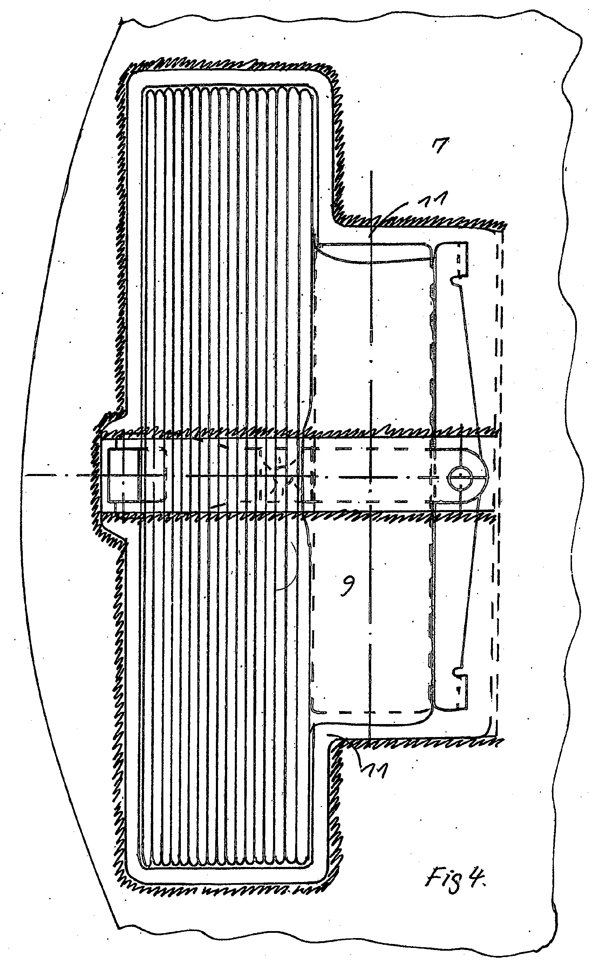

Gemäß der Fig. 4 ist ein komplettes Modul 9 in die Mulde 8 im Polsterschaum 7 eingesetzt. Will man eine perfekte Oberfläche haben, wird das "unegale" Modul 9 über seiner Oberfläche mit zwei Schaumlappen 11 abgedeckt, die vorzugsweise je ein integrales Schaumteil des Polsterschaums 7 sind und mit diesem über ein Filmscharnier verbunden sind. Zwischen den Schaumlappen 11 ist Platz gelassen für ein Laufmaschenreißband 12.

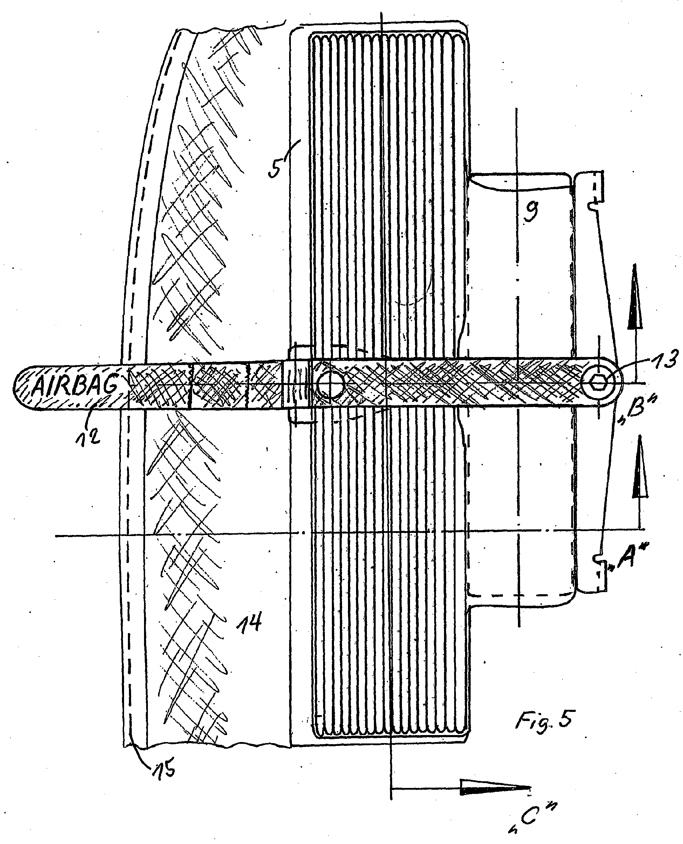

Die Fig. 5 zeigt die Installation des Laufmaschenreißbandes 12 im Modul 9 mit einer in einer Öse eingesetzten, unverlierbaren Schraube 13. Diese Schraube 13 ist die gemeinsame Befestigung von dem Modul 9 und dem Laufinaschenreißband 12.

Zur Montage des Moduls 9 wird dieses mit dem Befestigungsblech 3 verhakt. Die gemeinsame Verschraubung von Modul 9 und Laufmaschenreißband 12 stellt vorteilhafterweise sicher, dass letzteres befestigt wird.

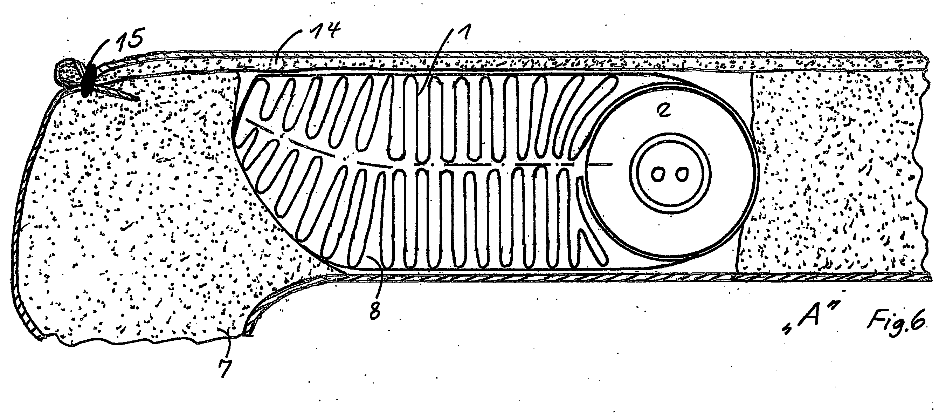

Die Fig. 6 zeigt im Schnitt "A" der Fig. 5 die Unterbringung des Moduls 9 ohne Gehäuse in der Mulde 8 des Polsterschaums 7. Der Airbag 1 ist unten alternativ mit Gleitfolie 5 versehen und wird oben z.B. als Montagehilfe mit einem aufgeklebten, dünnen Papier, Schlaufen o.ä. zusammengehalten.

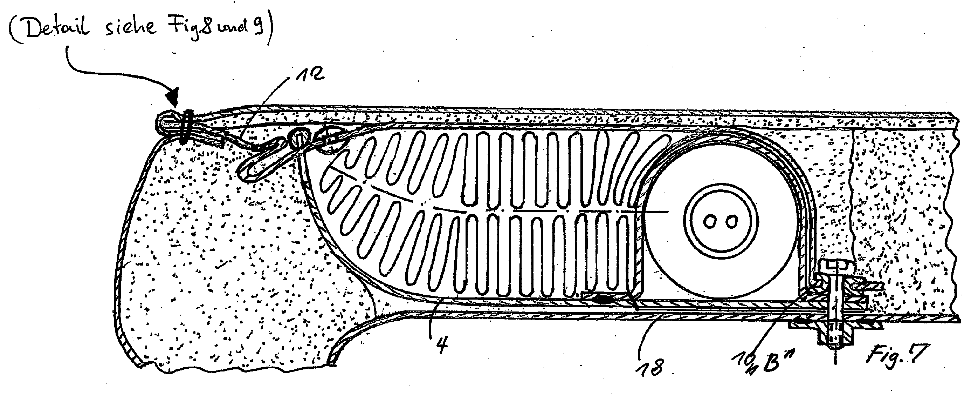

Die Fig. 7 zeigt im Mitten-Schnitt "B" der Fig. 5 die Befestigung des Laufmaschenreißbandes 12 an einem Sitzbezug 14, die Durchführung durch ein Loch 16 im Umlenkbügel 4 an einem Gleitstück 17 vorbei und die Befestigung mittels einer Öse 10 und der unverlierbaren Schraube 13 am Sitzlehnenrahmen.

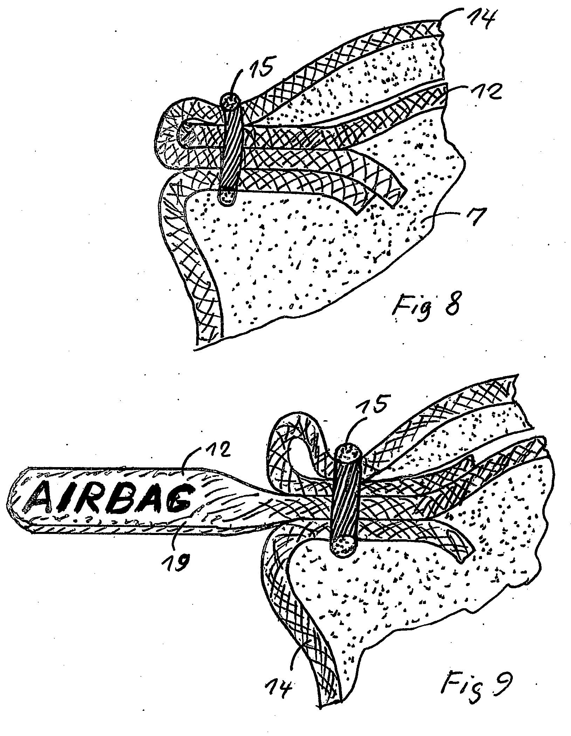

Die Fig. 8 zeigt im Detail eine Alternative der Vernähung des Laufmaschenreißbandes 12 im Sitzbezug 14.

Die Fig. 9 zeigt im Detail eine weitere Alternative mit sichtbarem "Airbaglabel" 19.

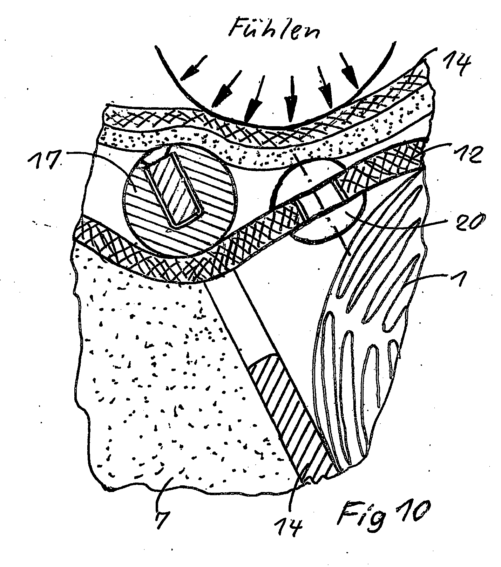

Die Fig. 10 zeigt im Detail die Durchführung des Laufmaschenreißbandes 12 durch ein Loch 16 im Umlenkbügel 4 an einem Gleitstück 17 vorbei. Das Gleitstück 17 wird alternativ zum blanken Blech als Umlenkung verwendet, wenn es wegen der Rutschverhältnisse des Laufmaschenreißbandes 12 bevorzugt oder notwendig ist.

Als erfinderische Besonderheit ist in Form einer Erhebung (z.B. als Niet) ein Montagefühler 20 angebracht. Wenn das Laufmaschenreißband 12 korrekt montiert ist, kann man am fertigen Sitz unter dem Sitzbezug 14 das Gleitstück 17 parallel neben dem Montagefühler 20 erfühlen.

Das ermöglicht insbesondere eine Zertifizierung einer korrekten Montage. Liegt der Montagefühler 20 oben oder unterhalb des Gleitstückes 17, so ist das Laufmaschenreißband 12 nicht durch das Loch 16 gesteckt worden.

Die Befestigung des Laufmaschenreißbandes 12 ist sicht- und fühlbar mit der in der Öse 10 im Laufmaschenreißband befestigten Schraube 13 verschraubt, wie das Modul 9. Dies dient ebenso der narrensicheren Montage und damit der Zertifizierung.

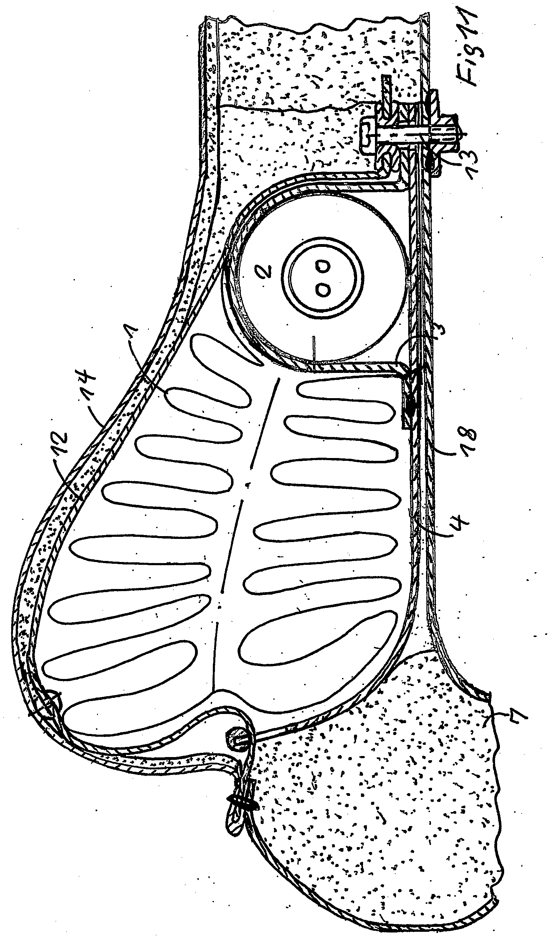

Die Fig. 11 zeigt im Mittelschnitt den Anfang der Airbagentfaltung. Der Airbag 1 drückt gegen das Laufmaschenreißband 12. Dieses zieht die Reißnaht 15 gegen den Umlenkbügel 4.

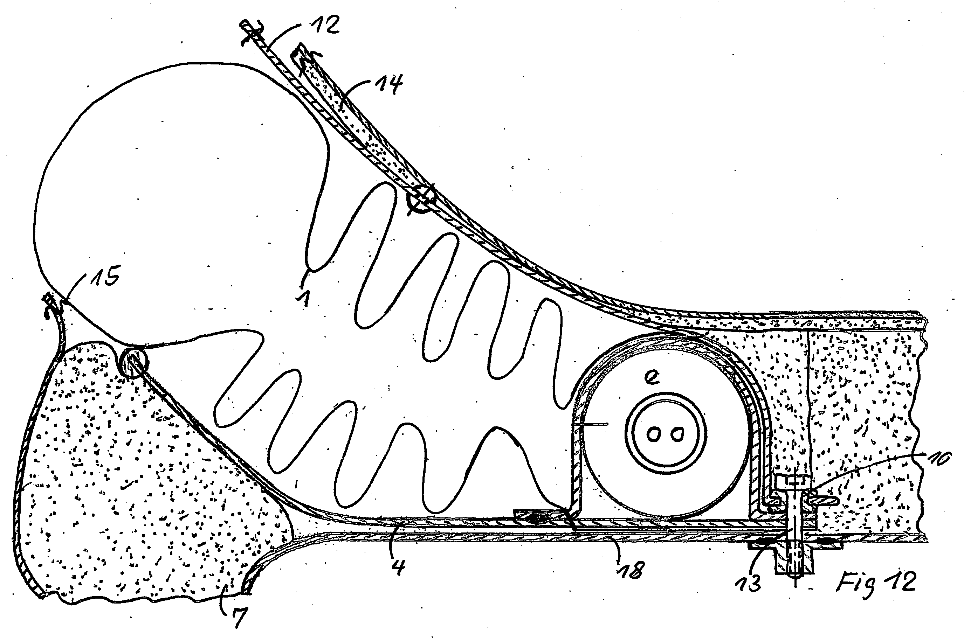

In der Fig. 12 ist im weiteren Zeitverlauf die Reißnaht 15 des Sitzbezuges 14 mittels Laufmaschenreißband 12 zerrissen und öffnet sich reißverschlußartig für den Durchtritt des Airbags 1.

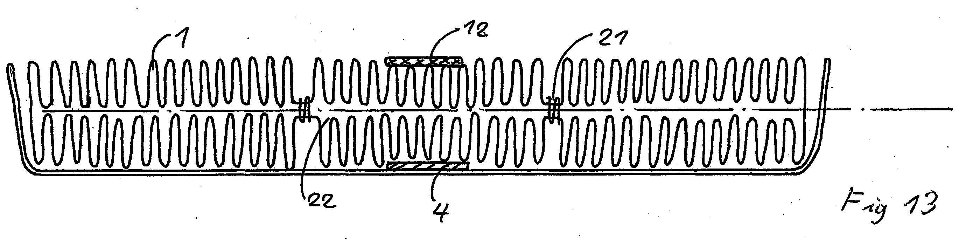

Da der Airbag 1 vor allem zuerst das Laufmaschenreißband 12 aktivieren muss, ist es vorteilhaft, das Gas zuerst in eine mittig mit Reißnähten 21 abgenähte Zone 22 des Airbags 1 zu leiten (Fig. 13).

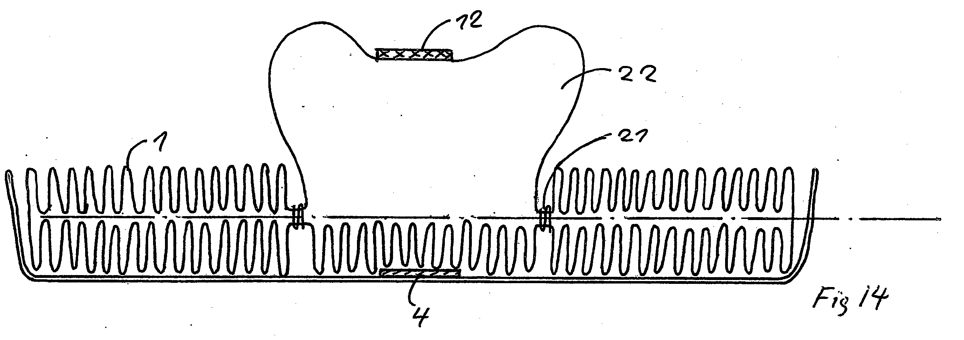

Die Fig. 14 zeigt die Bewegung der abgenähten Zone 22 am Anfang des Crashs.

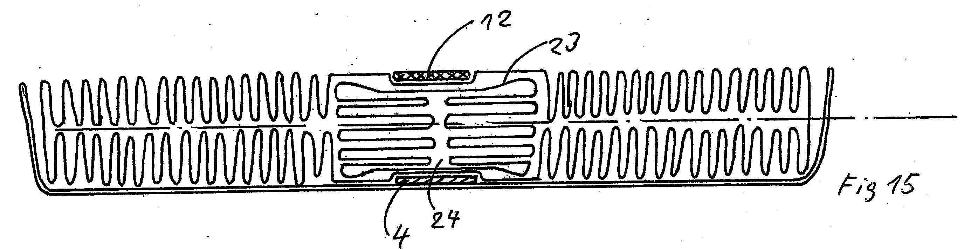

Die Fig. 15 zeigt einen separat eingelegten Hilfsbag 23 in einer mittleren Zone 24. Das hat alternativ den Vorteil einer konzentrierteren, höheren Druckbeaufschlagung wegen des besseren Materials des Hilfsbags 23. Der Hilfsbag 23 ist so abgenäht, dass die aufplatzenden Nähte das Gas in der vorgegebenen Richtung leiten und verteilen.

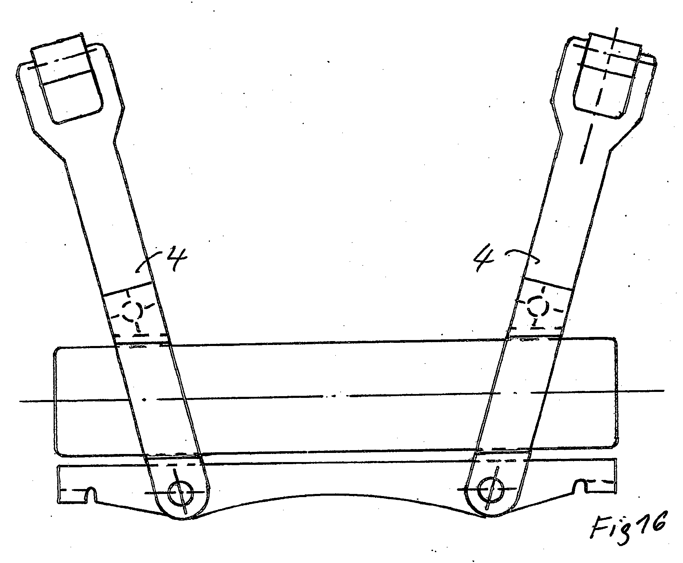

Die Fig. 16 zeigt alternativ die Ausführung für einen Zweizonenbag, z.B. zum Schutz von Thorax und Pelvis. Vorteilhaft ist es, wenn beide Bagzonen an vorbestimmten Stellen des Sitzbezuges 14 aus der Reißnaht 15 austreten. An diesen Stellen werden die Laufmaschenreißbänder 12 mit dem Sitzbezug 14 vernäht und in entsprechend angeordneten Umlenkbügeln 4 geführt.

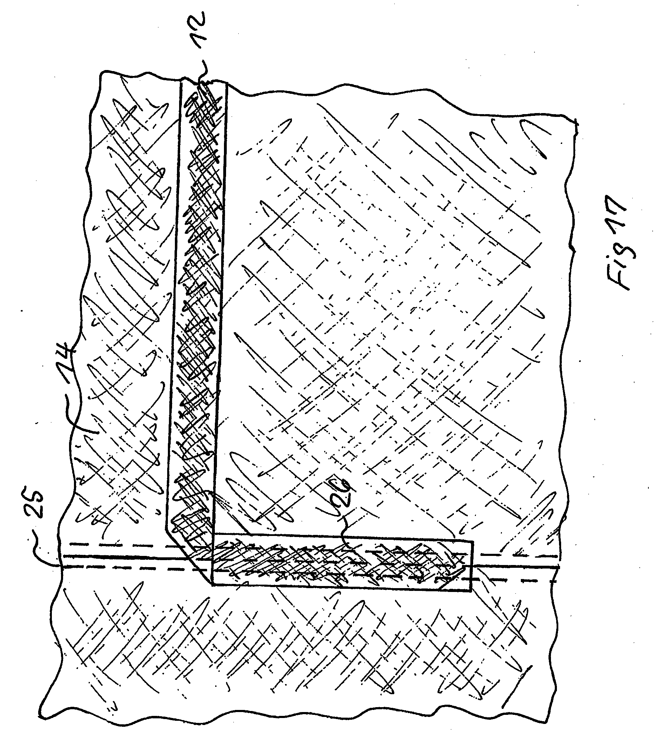

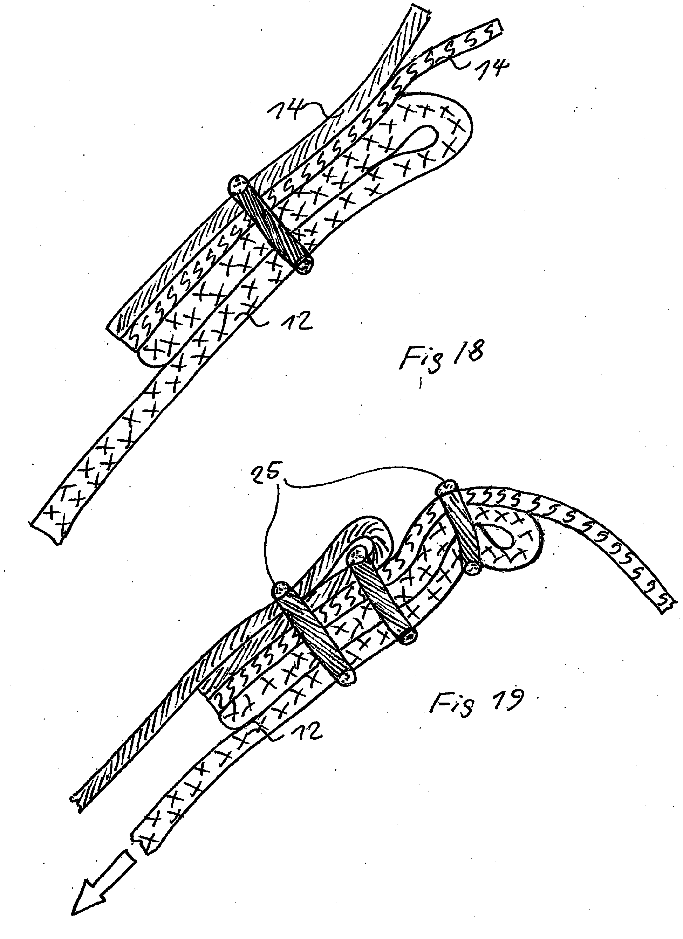

Die Fig. 17 zeigt eine alternative Ausführungsform des Annähens des Laufmaschenreißbandes 12. Durch die abgewinkelte Zugrichtung, wie in der Fig. 17 gezeigt ist, wird die Reißnaht 15 Stich 26 für Stich 26 weitgehend nacheinander durchgerissen. So ist ein leichtes Aufreißen möglich, wie hier in der alternativ gezeigten Reißnaht als Doppelkappnaht 25. Die abgewinkelte Laufmaschenreißbandanbindung 27 ergibt zudem ein großes Loch für den beginnenden Airbagaustritt (nicht gezeigt), was sich in vorteilhafter Weise für die Entfaltung günstig auswirkt. Wie in der Fig. 18 gezeigt ist, wird das Laufmaschenreißband 12 gemäß der Darstellung abgewinkelt beigenäht. Der Schnitt ist in die "Abwinklung" gelegt. Daneben ist das Laufmaschenreißband 12 nur einfach vernäht (nicht gezeigt). Die Fig. 19 zeigt das Zufügen der Reißnaht als Doppelkappnaht 25. Selbstverständlich ist diese Laufmaschenreißbandanordnung 12 für alle denkbaren Nahtformen anwendbar.

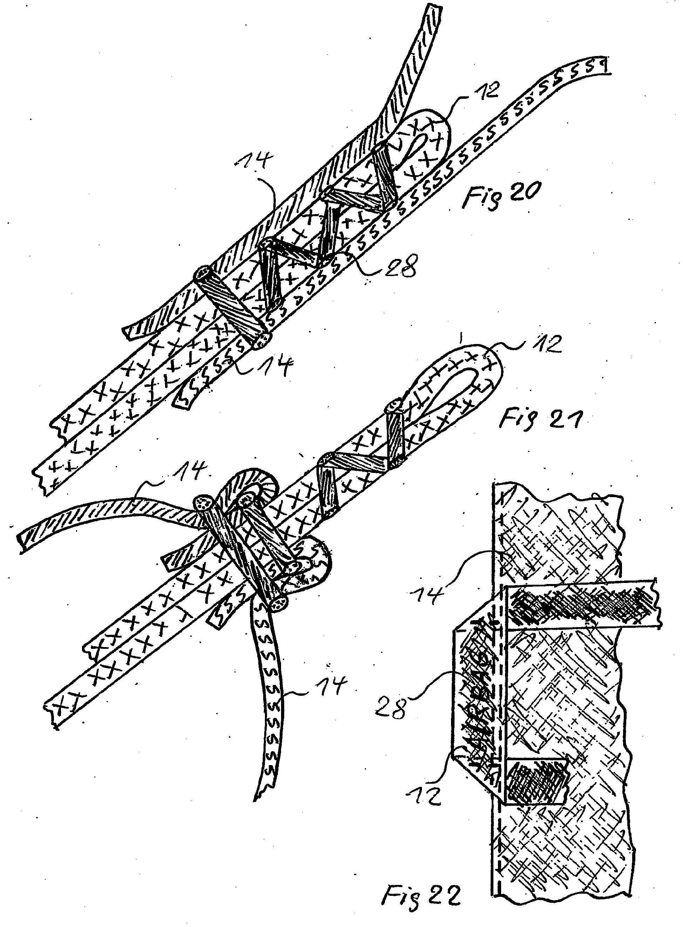

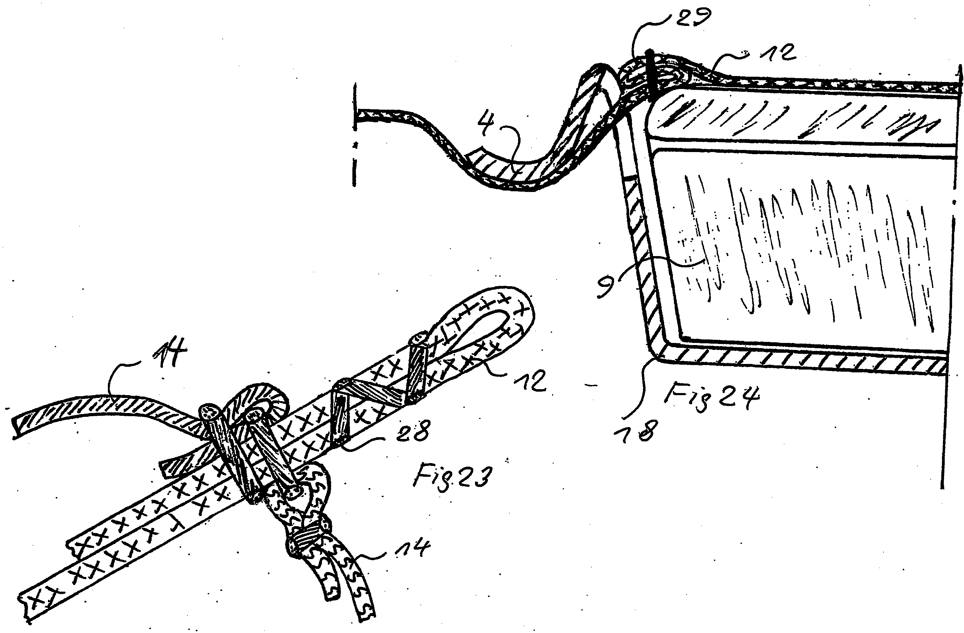

Die Fig. 20 bis 23 zeigen eine Reißnaht als Doppelkappnaht 25 mit durchgehendem Laufmaschenreißband 12, mit einer Airbagaufschrift 28 in der Art eines abgewinkelten Laufmaschenreißbandes 12 angenäht. Die Fig. 20 zeigt den ersten Nähschritt. Die Fig. 21 zweigt den zweiten und letzten Nähschritt. Die Fig. 22 zeigt die Ansicht des Laufmaschenreißbandes 12. Die Fig. 23 zeigt eine weitere Nähalternative zu der Fig. 21 mit dem Ziel einer "flacheren" Laufmaschenreißnaht 12 im Sitzbezug 14.

Bei allen Laufmaschenreißnähten wird als Unterfaden ein in Versuchen abgestimmter normalerweise schwächerer Reißfaden 29 verwendet.

Die Fig. 24 zeigt die Integration des Umlenkbügels 4 in den Sitzlehnenrahmen 18 als Schnitt an dieser Stelle. Selbstverständlich kann dieser Umlenkbügel auch an dem Sitzlehnenrahmen 18 separat befestigt sein. Das Laufmaschenreißband ist an dieser Stelle überlappend 29 genäht, um die Verdickung nach der Montage fühlen zu können. Das ist mit Vorzug Teil einer Zertifizierung , d.h. Sicherstellung der richtigen Montage.

Besondere Vorteile von solchen erfindungsgemäßen Thorax-Airbageinrichtüngen und Sitzen damit sowie Auslöseverfahren für solche erfindungsgemäßen Thorax-Airbags sind:
- 1.: Kostengünstige Ausführung.
- 2.: Niedriges Gewicht durch Wegfall des Gehäuses.
- 3.: Trotzdem gutes "Package" des Bags, da er zwischen Umlenkhebel und Laufmaschenreißband gepackt ist.
- 4.: Schnelles Öffnen des Bezugs durch die Laufmasche.
- 5.: Positionsgenaues Öffnen des Bezugs durch die Laufmasche.
- 6.: Geringe Aggressivität des Bags durch vorgeöffneten Sitzbezug.
- 7.: Einfache Handhabung des Bandes beim Beinähen und der Montage.
- 8.: Keine extra Zertifizierung notwendig, da korrekte Montage selbst beim fertigen Sitz nachfühlbar ist.
- 9.: Kaum Streuung der Versuchsergebnisse, da das immer gleiche Band die Öffnungszeit bestimmt.
- 10.: Jede Art von Stoff hat keinen Einfluss auf die Crashergebnisse bzw. das Austreten des Bags.

Zusammenfassend wird durch die vorliegende Erfindung eine weitere Verbesserung von Thorax-Airbageinrichtungen und Sitzen damit sowie Auslöseverfahren für Thorax-Airbags geschaffen, insbesondere mit folgenden Vorzügen:
- 1.: Schneller, unsichtbarer Bag unter dem Bezug der Sitzlehne mit geringer Aggressivität.
- 2.: Die Sitzbezugsdehnung hat keinen Einfluss.
- 3.: Keine extra Zertifizierung notwendig.
- 4.: Geringes Gewicht und Kosten.
- 5.: Beste Optik.

Die Erfindung ist anhand der Ausführungsbeispiele in der Beschreibung und in den Zeichnungen lediglich exemplarisch dargestellt und nicht darauf beschränkt, sondern umfaßt alle Variationen.

### Bezeichungen

- 1: Airbag
- 2: Generator
- 3: Befestigungsblech
- 4: Umlenkbügel, Umlenkarm I, Umlenkarm II
- 5: Gleitfolie
- 6: Rohr
- 7: Polsterschaum
- 8: Mulde
- 9: Modul
- 10: Öse
- 11: Schaumlappen
- 12: Laufmaschenreißband
- 13: Schraube
- 14: Sitzbezug
- 15: Reißnaht
- 16: Loch
- 17: Gleitstück
- 18: Sitzlehnenrahmen
- 19: Airbaglabel
- 20: Montagefühler
- 21: Reißnähte
- 22: abgenähte Zone
- 23: Hilfsbag
- 24: mittlere Zone
- 25: Reißnaht mit Doppelkappnaht
- 26: Stich
- 27: Laufmaschenreißbandanbindung
- 28: Airbagaufschrift
- 29: überlappende Verdickung

## Patentansprüche

1. Sitz mit einer Thorax-Airbageinrichtung, die ein gehäuseloses Modul (9) mit einem Thorax-Airbag (1) enthält und unter einem Sitzbezug (14) untergebracht ist, der eine Rcißnaht (15) enthält, die mittels eines Reißbandes (12) zerreißbar ist, indem der sich im Falle der Auslösung der Thorax-Airbageinrichtung entfaltende Thorax-Airbag (1) auf das Reißband (12) einwirkt,
wobei das Reißband (12) an einem Sitzlehnenrabmen (18) des Sitzes befestigt und in die Reißnaht (15) eingenäht ist, **dadurch gekennzeichnet, dass** das in die Reißnaht (15) eingenähte Ende des Reißbandes (12) durch den sich entfaltenden Thorax-Airbag (1) aus der Reißnaht (15) gerissen wird und in der Reißnaht (15) eine Laufmasche auslöst, so dass das Reißband ein Laufmaschenreißband (12) ist, und
wobei die Thorax-Airbageinrichtung gebäuselos zwischen einem Umlcnkbügcl (4) und dem Laufmaschenreißband (12) gelagert ist, das zwischen seiner Befestigung am Sitzlehnenrahmen (18) des Sitzes und seiner Einnähung in die Rcißnaht (15) am Umlenkbügel (4) durchgesteckt ist.

2. Sitz nach einem der vorhergehenden Ansprüche,
**dadurch gekennzeichnet,**
**dass** das Laufmaschenreißband (12) mittels unverlierbarer Schraube (13) oder einem Niet mitsamt einem Modul (9) als Garantie zur sicheren Montage, vorzugsweise als Teil einer Zertifizierung, verschraubt ist.

3. Sitz nach einem der vorhergehenden Ansprüche,
**dadurch gekennzeichnet,**
**dass** Umlenkbügel (4), Befestigungsblech (3) und Befestigungsbügel für einen Generator (2) eine Trägereinheit bzw. ein Gerippe für das ganze Modul (9) bilden und als Auflage für den Airbag (1) dienen.

4. Sitz nach einem der vorhergehenden Ansprüche,
**dadurch gekennzeichnet,**
**dass** eine Abgleitfolie (5) zum Umlenkbügel hinzugefügt ist, um den Airbag (1) besser zu leiten und um einen Schaumausbruch zu verhindern.

5. Sitz nach einem der vorhergehenden Ansprüche,
**dadurch gekennzeichnet,**
**dass** eine Abdeckung der unegalen Oberfläche mit Schaumlappen (11) als Teil des Sitzschaums mit Filmscharnier angesenkt und derart ausgeführt ist, dass Raum für das Laufmaschenreißband (12) verbleibt.

6. Sitz nach einem der vorhergehenden Ansprüche,
**dadurch gekennzeichnet,**
**dass** ein dünnes, aufgeklebtes Papier vorgeschen ist, das die Airbagfalten für die Montage in Position hält.

7. Sitz nach einem der vorhergehenden Ansprüche,
**dadurch gekennzeichnet,**
**dass** das Laufmaschenreißband (12) zur Reißnaht (15) beigenäht ist.

8. Sitz nach einem der vorhergehenden Ansprüche,
**dadurch gekennzeichnet,**
**dass** das Laufmaschenreißband (12) aus der Reißnaht (15) als sichtbares Airbaglabel (19) austritt.

9. Sitz nach einem der vorhergehenden Ansprüche,
**dadurch gekennzeichnet,**
**dass** eine fühlbare Erhebung am Laufmaschenreißband an der Stelle des Durchlaufs durch den Umlenkbügel angebracht ist.

10. Sitz nach Anspruch 9.
**dadurch gekennzeichnet,**
**dass** ein paralleles Umlenkbügelgleitstück und die fühlbare Erhebung, beispielsweise ein Niet, eine korrekte Montage beweisen und insbesondere eine Zertifizierung begründen.

11. Sitz nach einem der vorhergehenden Ansprüche,
**dadurch gekennzeichnet,**
**dass** der Airbag derart mit einer abgenähten/geklebten Mittelzone (24) versehen ist, dass diese zur Erzeugung einer frühzeitigen Laufmasche zuerst Druck auf das Laufmasohenreißband gibt.

12. Sitz nach einem der vorhergehenden Absprüche,
**dadurch gekennzeichnet,**
**dass** ein zwischen Umlenkbügel (4) und Laufmaschenrcißband (12) eingebauter zusätzlicher Hilfsbag vorgesehen ist, der mit kleinerem Volumen und höherem Druck (festeres Textil) die Reißnaht schneller öffnet und durch gezielte Schwächung seiner eigenen Reißnähte das Gas vorbestimmt verteilt.

13. Auslöseverfahren für einen Thorax-Airbag (1) einer in einen Sitz einem der nach Ansprüche 1-12 cingebauten Thorax-Airbageinrichtung, die ein gehäuscloses Modul (9) mit dem Thorax-Airbag (1) enthält und unter einem Sitzbezug (14) mit einer Reißnaht (15) untergebracht ist, und im Fall des Auslösens durch den Sitzbezug (14) austritt, wobei die Reißnaht (15) mittels eines Reißbandes (12) zerrissen wird, indem der sich im Falle der Auflösung der Thorax-Airbageinrichtung entfaltende Thorax-Airbag (1) auf das Reißband (12) einwirkt,
wobei das Reißband, das an einem Sitzlchnenrahmen (18) des Sitzes befestigt und in die Reißnaht (15) eingenäht ist sowie zwischen dem Sitzlehnenrahmen (18) und der Reißnaht durch einen Umlenkbügel (4) gerührt ist, als Laufmaschenreißband (12) am in die Reißnaht (15) eingenähten Ende durch den sich entfaltenden Thorax-Airbag (1) aus der Reißnaht (15) gerissen wird und in der Reißnaht (15) eine Laufmasche auslöst.

## Claims

1. A seat with a thorax airbag device, which comprises a caseless module (9) with a thorax airbag (1) and is accommodated under a seat cover (14) comprising a tearing seam (15) that can be torn by means of a tearing strip (12) through the thorax airbag (1), which unfolds in the event of the thorax airbag device being triggered, acting on the tearing strip (12),
wherein the tearing strip (12) is attached to a backrest frame (18) of the seat and is sewn into the tearing strip (15), **characterized in that** the end of the tearing strip (12) sewn into the tearing seam (15) is torn from the tearing seam (15) by the unfolding thorax airbag (1) and causes a run in the tearing seam (15), so that the tearing strip is a run tearing strip (12), and
wherein the thorax airbag device is mounted in a caseless manner between a guide bracket (4) and the run tearing strip (12), which is passed through between its attachment on the backrest frame (18) of the seat and its sewn-in portion in the tearing seam (15) at the guide bracket (4).

2. The seat according to any one of the preceding claims,
**characterized in that**
the run tearing strip (12) is screw-connected by means of a loss-proof screw (13) or a rivet together with a module (9) as a guarantee for a secure assembly, preferably as a part of a certification.

3. The seat according to any one of the preceding claims,
**characterized in that**
the guide bracket (4), the attachment panel (3) and the attachment bracket for a generator (2) form a carrying unit or a frame structure for the entire module (9) and serve as a support for the airbag (1).

4. The seat according to any one of the preceding claims,
**characterized in that**
a sliding sheet (5) is added to the guide bracket in order to better guide the airbag (1) and to prevent a break-out of foam.

5. The seat according to any one of the preceding claims,
**characterized in that**
a cover of the uneven surface with foam pads (11) as a part of the seat foam is hinge-connected by means of a film hinge and configured in such a way that space is left for the run tearing strip (12).

6. The seat according to any one of the preceding claims,
**characterized in that**
a thin, glued-on paper is provided which keeps the airbag folds in position for assembly.

7. The seat according to any one of the preceding claims,
**characterized in that**
the run tearing strip (12) is sewn onto the tearing seam (15).

8. The seat according to any one of the preceding claims,
**characterized in that**
the run tearing strip (12) emerges from the tearing seam (15) as a visible airbag label (19).

9. The seat according to any one of the preceding claims,
**characterized in that**
a palpable raised portion is provided on the run tearing strip at the location of the passage through the guide bracket.

10. The seat according to claim 9,
**characterized in that**
a parallel guide bracket sliding piece and the palpable raised portion, for instance a rivet, are proof for a correct assembly and, in particular, provide the basis for a certification.

11. The seat according to any one of the preceding claims,
**characterized in that**
the airbag is provided with a taken-in/glued middle zone (24) in such a way that the latter first exerts pressure on the run tearing strip for generating an early run.

12. The seat according to any one of the preceding claims,
**characterized in that**
an additional auxiliary bag inserted between the guide bracket (4) and the run tearing strip (12) is provided, which, with a smaller volume and higher pressure (firmer textile), opens the tearing seam more rapidly and distributes the gas in a predetermined manner by a targeted weakening of its own tearing seams.

13. A triggering method for a thorax airbag (1) of a thorax airbag device, which is built into a seat according to any one of the claims 1 - 12 and which contains a caseless module (9) with the thorax airbag (1) and is accommodated under a seat cover (14) with a tearing seam (15) and which, in the event of being triggered, emerges through the seat cover (14), wherein the tearing seam (15) is torn by means of a tearing strip (12) through the thorax airbag (1), which unfolds in the event of the thorax airbag device being triggered, acting on the tearing strip (12),
wherein the tearing strip, which is attached to a backrest frame (18) of the seat and is sewn into the tearing strip (15) and is guided between the backrest frame (18) and the tearing seam by a guide bracket (4), is torn, at the end sewn into the tearing seam (15), from the tearing seam (15) by the unfolding thorax airbag (1) and causes a run in the tearing seam (15), as a run tearing strip (12).

## Revendications

1. Siège comportant un dispositif de coussin de sécurité gonflable pour le thorax, qui comprend un module sans boîtier (9) avec un coussin de sécurité gonflable de thorax (1) et est logé sous un revêtement de siège (14) comportant une couture de déchirage (15) qui peut être déchirée au moyen d'une bande de déchirage (12), le coussin de sécurité gonflable de thorax (1) agissant sur la bande de déchirage (12) en se déployant dans le cas du déclenchement du dispositif de coussin de sécurité gonflable de thorax,
dans lequel la bande de déchirage (12) est fixée à un cadre de dossier (18) du siège et est cousue dans la couture de déchirage (15),
**caractérisé en ce que** l'extrémité de la bande de déchirage (12) qui est cousue dans la couture de déchirage (15) est arrachée par l'intermédiaire du coussin de sécurité gonflable de thorax (1) qui se déploie en dehors de la couture de déchirage (15) et déclenche une maille filée dans la couture de déchirage (15) de sorte que la bande de déchirage est une bande de déchirage en maille filée (12) et
dans lequel le dispositif de le coussin de sécurité gonflable de thorax est monté sans boîtier entre un étrier de déflexion (4) et la bande de déchirage en maille filée (12) qui est enfilée entre sa fixation au cadre de dossier (18) du siège et sa couture dans la couture de déchirage (15) au niveau de l'étrier de déflexion (4).

2. Siège selon la revendications 1,
**caractérisé en ce**
**que** la bande de déchirage en maille filée (12) est vissée au moyen d'une vis imperdable (13) ou d'un rivet avec un module (9) servant de garantie pour un montage sûr, de préférence en tant que partie d'une certification.

3. Siège selon une des revendications précédentes, **caractérisé en ce**
**que** l'étrier de déflexion (4), la tôle de fixation (3) et l'étrier de fixation forment une unité support pour un générateur (2) ou une ossature pour le module entier (9) et servent d'appui au coussin de sécurité gonflable (1).

4. Siège selon une des revendications précédentes, **caractérisé en ce**
**qu'**un film de glissement (5) est ajouté à l'étrier de déflexion pour mieux diriger le coussin de sécurité gonflable (1) et empêcher une sortie de mousse.

5. Siège selon une des revendications précédentes, **caractérisé en ce**
**qu'**un recouvrement de la surface inégale avec des pattes en mousse (11) faisant partie de la mousse du siège est articulée avec des charnières intégrales et configurée de manière à conserver l'espace pour la bande de déchirage en maille filée (12).

6. Siège selon une des revendications précédentes, **caractérisé en ce**
**qu'**un papier mince collé est prévu et maintient en position les plis du coussin de sécurité gonflable pour le montage.

7. Siège selon une des revendications précédentes, **caractérisé en ce**
**que** la bande de déchirage en maille filée (12) est cousue à proximité de la couture de déchirage (15).

8. Siège selon une des revendications précédentes, **caractérisé en ce que**
la bande de déchirage en maille filée (12) sort de la couture de déchirage (15) sous la forme d'une étiquette visible (19) de coussin de sécurité gonflable.

9. Siège selon une des revendications précédentes, **caractérisé en ce**
**qu'**une bosse palpable au niveau de la bande de déchirage en maille filée est appliquée à l'endroit du passage à travers l'étrier de déflexion.

10. Siège selon la revendication 9,
**caractérisé en ce**
**qu'**une pièce parallèle de glissement d'étrier de déflexion et la bosse palpable, par exemple un rivet, attestent d'un montage correct et justifient en particulier une certification.

11. Siège selon une des revendications précédentes, **caractérisé en ce**
**que** le coussin de sécurité gonflable est muni d'une zone centrale (24) cousue/collée de telle sorte que celle-ci fasse d'abord pression sur la bande de déchirage en maille filée pour produire une maille filée précocement.

12. Siège selon une des revendications précédentes, **caractérisé en ce**
**qu'**un coussin auxiliaire supplémentaire est prévu entre l'étrier de déflexion (4) et la bande de déchirage en maille filée (12), lequel ouvre plus rapidement la couture de déchirage avec un plus petit volume et une plus grande pression (textile plus solide) et répartit de manière prédéterminée le gaz par une fragilisation ciblée de ses propres coutures de déchirage.

13. Procédé de déclenchement pour un coussin de sécurité gonflable de thorax (1) d'un dispositif de coussin de sécurité gonflable pour le thorax monté dans un siège selon une des revendications 1 à 12, lequel dispositif comprend un module sans boîtier (9) comportant le coussin de sécurité gonflable de thorax (1) et est disposé sous un revêtement de siège (14) comportant une couture de déchirage (15), et en cas de déclenchement sort du revêtement de siège (14), dans lequel la couture de déchirage (15) est déchirée au moyen d'une bande de déchirage (12), le coussin de sécurité gonflable de thorax (1) agissant sur la bande de déchirage (12) en se déployant dans le cas du déclenchement du dispositif de coussin de sécurité gonflable de thorax,
dans lequel la bande de déchirage qui est fixée à un cadre de dossier (18) du siège et est cousue dans la couture de déchirage (15) et guidée entre le cadre de dossier (18) du siège et la couture de déchirage par l'intermédiaire d'un étrier de déflexion (4) est arrachée sous la forme d'une bande de déchirage en maille filée (12) au niveau de l'extrémité cousue dans la couture de déchirage (15) par l'intermédiaire du coussin de sécurité gonflable de thorax (1) qui se déploie en dehors de la couture de déchirage (15) et déclenche une maille filée dans la couture de déchirage (15).
